# EUROPÄISCHE PATENTSCHRIFT

(11) **EP 2 428 260 B1**
(45) Veröffentlichungstag und Bekanntmachung des Hinweises auf die Patenterteilung: **02.07.2014**
(21) Anmeldenummer: 10405171.9
(22) Anmeldetag: 14.09.2010
(51) Int. Cl.: B05B 9/04, B05B 15/00

(54) **Spritzpistolenfilter zum Filtern von Flüssigkeit und dessen Verwendung**
Spray gun filter for filtering liquids and its application
Filtre de pistolet pulvérisateur destiné au filtrage de liquides et son utilisation

(43) Veröffentlichungstag der Anmeldung: 14.03.2012
(73) Patentinhaber: J. Wagner AG, 9450 Altstätten (CH)
(72) Erfinder: Mazenauer, Rolf, 9443 Widnau (CH)
(74) Vertreter: Nückel, Thomas

(56) Entgegenhaltungen:
- US-A- 3 065 918
- US-A- 4 818 398
- US-A- 5 514 275
- US-A- 5 916 435
- US-A1- 2005 103 700

## Beschreibung

### Technisches Gebiet

Die Erfindung betrifft einen Spritzpistolenfilter, der an oder in der Nähe der Spritzpistole angeordnet ist und zum Filtern von Flüssigkeit, wie beispielsweise Beschichtungsmaterial, geeigneL ist.

### Stand der Technik

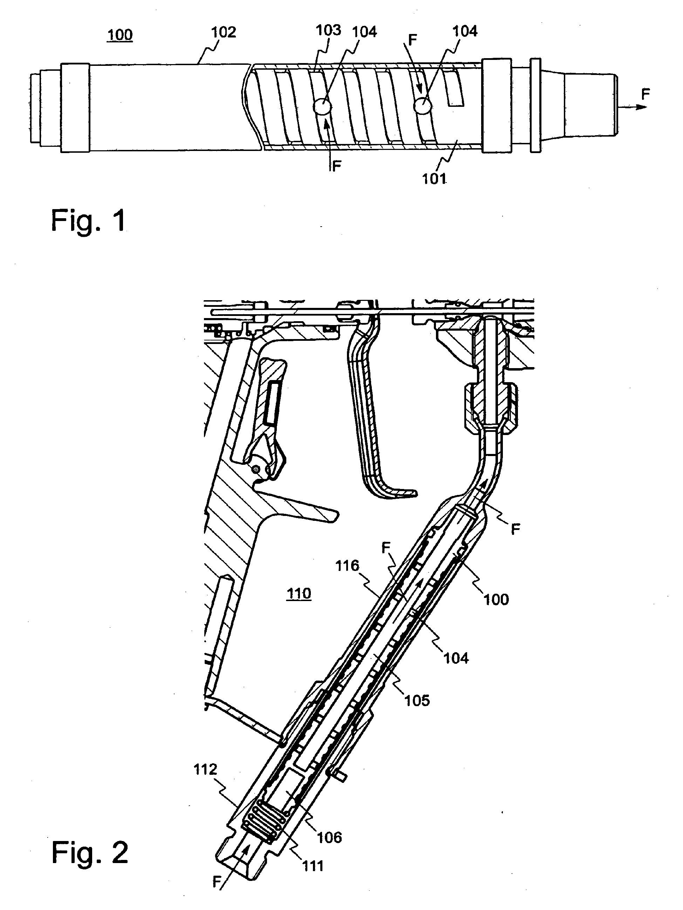

Risher wird in Spritzpistolen 110 der in den Figuren 1 und 2 gezeigte Spritzpistolenfilter 100 eingesetzt. Der Spritzpistolenfilter 100 umfasst eine rohrförmige Filterstütze 101 und ein rohrförmiges Filtergewebe 102, das die äussere Mantelfläche der FilLersLütze umgibt. Farbe F wird unter Druck, in der Regel zwischen 80 und 500 bar, von aussen durch das Filtergewebe 102 gedrückt und strömt dann entlang eines Kanals 103, der sich zwischen dem Filtergewebe 102 und der Filterstütze 101 befindet. In der Filterstütze 101 sind Auslassöffnungen 104 vorgesehen, die den Kanal 103 mit dem Innenraum 105 der Filterstütze 101 verbinden. Die Farbe F strömt so durch den Kanal 103 und die Auslassöffnungen 104 ins Innere 105 der Filterstütze 101. Von dort gelangt die gefilterte Farbe F zur Sprühdüse der Spritzpistole 110. Die Filterrückstände bleiben aussen am Filtergewebe 102 hängen. Der Spritzpistolenfilter 100 hat den Nachteil, dass die Filterrückstände beim Entfernen des Spritzpistolenfilters 100 im Filtergehäuse 112, 116 der Spritzpistole 110 zurück bleiben. Darüber hinaus hat der Spritzpistolenfilter 100 den Nachteil, dass eine Feder 111 erforderlich ist, um den Spritzpistolenfilter 100 im Filtergehäuse 112, 116 in der richtigen Position zu fixieren. Ein weiterer Nachteil des Spritzpistolenfilters 100 besteht darin, dass er am stromaufwärtigen Ende einen Totraum 106 aufweist, der die Gesamtlänge des Spritzpistolenfilters 100 und damit auch des Filtergehäuses 112, 116 vergrössert.

US 5,514,275 offenbart alle Merkmale des Oberbegriffs von Anspruch 1.

### Darstellung der Erfindung

Eine Aufgabe der Erfindung ist es einen Spritzpistolenfilter zum Filtern von Flüssigkeit anzugeben, der eine höhere Standzeit bei gleichzeitiq kleineren Abmessungen aufweist.

Vorteilhafterweise ist kein zusätzliches Bauteil, wie zum Beispiel die Feder bei der Ausführungsform gemäss Figur 2, erforderlich, um den Spritzpistolenfilter im Filtergehäuse zu fixieren. Dadurch lassen sich die Ilerstellungskosten reduzierten. Weil das zusätzliche Bauteil entfällt, kann es auch nicht mehr verloren gehen und muss auch nicht gereinigt werden. Der Wartungsaufwand für das Personal wird reduziert und die Gefahr, dass die Feder und der Spritzpistolenfilter falsch in das Filtergehäuse eingesetzt werden, wird ebenfalls reduziert.

Ein weiterer Vorteil des erfindungsgemässen Spritzpistolenfilters besteht darin, dass, nachdem der Spritzpistolenfilter aus dem Filtergehäuse entnommen wurde, keine Filterrückstände und Verunreinigungen im Filtergehäuse der Spritzpistole verbleiben.

Darüber hinaus erzeugt der erfindungsgemässe Spritzpistolenfilter einen geringeren Druckverlust.

Auch die Handhabung der gesamten Spritzpistole und insbesondere die Demontage wird verbessert. Wenn sich Farbe im Filtergehäuse festgesetzt hat, kann der Spritzpistolenfilter gemäss Figur 1 nur mit Kraftaufwand aus dem Filtergehäuse herausgezogen werden. Oftmals ist dazu sogar Werkzeug erforderlich. Um den erfindunqsgemässen Spritzpistolenfilter aus dem Filtergehäuse herauszuziehen, ist bedeutend weniger Kraft erforderlich. In der Regel bedarf es dazu keines Werkzeugs.

Der erfindungsgemässe Spritzpistolenfilter hat gegenüber dem Spritzpistolenfilter gemäss Figur 1 keinen Totraum mehr. Auf diese Weise wird die Gesamtlänge des Spritzpistolenfilters und auch die Länge des Filtergehäuses reduzierl. Das Gesamtgewicht der Spritzpistole reduziert sich um die Gewichtscinsparung beim Spritzpistolenfilter, um die Gewichtseinsparung beim FilLergehäuse und um die Gewichtseinsparung bei der Farbe.

Die Aufgabe wird durch einen Spritzpistolenfilter zum Filtern von Flüssigkeit mit den in Patentanspruch 1 angegebenen Merkmalen gelöst.

Der erfindungsgemässe Spritzpistolenfilter zum Filtern von Flüssigkeit umfasst ein Filtergewebe und eine Filterstütze, die Auslassöffnungen für die Flüssigkeit aufweist und das Filtergewebe aussen umgibt.

Vorteilhafte Weiterbildungen der Ereindung ergaben sich aus den in den abhängigen Patentansprüchen angegebenen Merkmalen.

Bei einer Ausführungsform des erfindungsgemässen Spritzpistolenfilters sind die Auslassöffnungen über die Länge der Filterstütze verteilt angeordnet. Dies hat den Vorteil, dass der auf der Filterstützc lastende Druck gleichmässig verteilt ist. Die Filterstütze kann dadurch dünnwandiger und mit weniger Material hergestellt werden.

Bei dem erfindungsgemässen Spritzpistolenfilter ist die Filterstütze aussen konisch geformt. Dadurch kann sie leichter aus der Spritzpistole entnommen werden. Dies ist insbesondere dann von Vorteil, wenn Farbe im Filtergehäuse der Spritzpistole aushärtet und der Spritzpistolenfilter mit dem Filtergehäuse verklebt ist.

Bei einer zusätzlichen Ausführungsform des erfindungsgemässen Spritzpistolenfilters ist die Filterstütze am einen stirnseitigen Ende offen und am anderen stirnseitigen Ende geschlossen.

Bei einer Weiterbildung des erfindungsgemässen Spritzpistolenfilter ist das Filtergewebe aus Draht oder einem gesinterten, flüssigkeitsdurchlässigen MaLerial hergestellt. Das Filtergewebe aus Draht ist robust und hat eine lange Standzeit.

Bei dem erfindungsgemässen Spritzpistolenfilter weist das Filtergewebe eine im wesentlichen zylindrische Form auf. Ein derart geformtes Filtergewebe ist einfach herstellbar. Als Ausgangsmaterial kann Filtergewebe von der Rolle verwendet werden, das auf Mass geschnitten, auf den gewünschten Durchmesser gerollt und an der Nahtstelle verschweisst wird. Zudem kann das zylindrisch geformte Filtergewebe ohne weiteres in die Filterstütze hineingesteckt und mit ihr verbunden werden.

Nach einem weiteren Merkmal der Erfindung kann diese noch weiter verbessert werden, indem die Filterstütze aus Polyamid, Polypropylen, Polyethylen oder Polyoxymethylen hergestellt isL. Diese Materialien sind spritzgussfähig, so dass die Filterstütze in grosson Stückzahlen kostengünstig herstellbar ist. Zudem ist der SpritzpisLolcnfilter mit einer aus einem dieser Materialien hergestellten Filterstütze stabil genug, um Drücken zwischen 80 und 500 bar standzuhalten.

Darüber hinaus kann der erfindungsgemässe Spritzpistolefilter eine Hülse aufweisen, in der die Filterstütze angeordnet isL und bei dem die Filterstütze und die Hülse derart ausgebildet sind, dass sie einen Kanal für die gefilterte Flüssigkeit bilden. Durch die Hülse wird vermieden, dass die gefilterte Flüssigkeit mit dem Filtergehäuse der Spritzpistole in Kontakt kommt. Wenn die Flüssigkeit im Spritzpistolenfilter aushärtet, verklebt der Spritzpistolenfilter nicht miL dem FilLcrgehäuse, so dass auch in diesem Fall sichergestellt ist, dass der Spritzpistolenfilter ohne weiteres aus dem Filtergehäuse entnommen werden kann.

Ferner wird eine Spritzpistole vorgeschlagen, bei der ein Filtergehäuse vorgesehen ist und bei der die Aussenseite der Filterstütze am Filtergehäuse anliegt. Die Spritzpistole hat die oben genannten Vorteile.

Bei einer Ausführungsform der erfindungsgemässen Spritzpistole sind die Filterstütze und das Filtergehäuse derart ausgebildet, dass sie zusammen einen Kanal für die Flüssigkeit bilden.

Bei einer weiteren Ausführungsform der erfindungsgemässen Spritzpistole sind die Filterstütze und das Filtergehäuse derart ausgebildet, dass sie zusammen mehrere Kanäle bilden, die miteinander verbunden sind. Dadurch wird der durch den Spritzpistolenfilter bedingte Druckverlust noch weiter reduziert.

Bei einer Weiterbildung der erfindungsgemässen Spritzpistole umfasst das Filtergehäuse einen ersten und einen zweiten Gehäuseteil, wobei die beiden Gehäuseteile mittels einer lösbaren Verbindung miteinander verbunden sind. Die Verbindung kann beispielsweise eine Schraubverbindung sein. Dadurch kann der Spritzpistolenfilter aus dem Filtergehäuse entnommen, kontrolliert und gegebenenfalls gereinigt oder ersetzt werden.

Bei einer weiteren Weiterbildung der erfindungsgemässen Spritzpistole weist das Filtergehäuse einen Absatz auf, an dem sich die Filterstütze abstützt. Der Absatz kann als Anschlag dienen, um die axiale Position des Spritzpistolenfilters zu definieren. Sobald Flüssigkeit unter Druck in den Spritzpistolenfilter gepresst wird, wird die Filterstütze auf den Anschlag gepresst.

Ferner wird ein Spritzsystem vorgeschlagen, das eine Spritzpistole, eine Schlauchleitung und einen Spritzpistolenfilter aufweist, wobei der Spritzpistolenfilter zwischen zwei Schlauchabschnitten der Schlauchleitung angeordneL ist.

Schliesslich kann der Spritzpistolenfilter für wasserlöslichen Lack, lösemittelhaltigen Lack, Mehrkomponentenlack, Grundierung, Korrosionsschutzmittel oder Öl verwendet werden.

### Kurze Beschreibung der Zeichnungen

Im Folgenden wird die Erfindung mit mehreren Ausführungsbeispielen anhand von 12 Figuren weiter erläutert.
- Figur 1: zeigt einen bereits bekannten Spritzpistolenfilter in der Seitenansicht, wobei ein Teil aufgebrochen dargestellt ist.
- Figur 2: zeigt einen Teil einer Spritzpistole mit dem bekannten Spritzpistolenfilter in der Seitenansicht im Schnitt.
- Figur 3: zeigt eine erste mögliche Ausführungsform des erfindungsgemässen Spritzpistolenfilters in der Seitenansicht und in der Ansicht vom FilLerkopf aus betrachtet.
- Figur 4: zeigt die erste mögliche Ausführungsform des erfindungsgemässen Spritzpistolenfilters im Längsschnitt.
- Figur 5: zeigt die erste mögliche Ausführungsform des erfindungsgemässen Spritzpistolenfilters in einer Explosionsansicht.
- Figur 6a: zeigt eine zweite mögliche Ausführungsform des erfindungsgemässen Spritzpistolenfilters in der Ansicht von der Einlassseite aus betrachtet.
- Figur 6b: zeigt die zweite Ausführungsform des erfindungsgemässen Spritzpistolenfilters in der Ansicht im Längsschnitt entlang der Schnittlinic B-B.
- Figur 6c: zeigt die zweite Ausführungsform des Spritzpistolenfilters in der Seitenansicht.
- Figur 6d: zeigt die zweite Ausführungsform des Spritzpistolenfilters im Längsschnitt entlang der Schnittlinie D-D.
- Figur 6e: zeigt die zweite Ausführungsform des erfindungsgemässen Spritzpistolenfilters in der Ansicht vom Filterkopf aus betrachtet.
- Figur 7a: zeigt eine dritte mögliche Ausführungsform des erfindungsgemässen Spritzpistolenfilters im Längsschnitt entlang der Schnittlinie B-B.
- Figur 7b: zeigt die dritte Ausführungsform des Spritzpistolenfilters in der Seitenansicht.
- Figur 7c: zeigt die dritte Ausführungsform des Spritzpistolenfilters vom Filterkopf aus betrachtet.
- Figur 8a: zeigt eine vierte mögliche Ausführungsform des erfindungsgemässen Spritzpistolenfilters im LängsschniLL entlang der Schnittlinie B-B.
- Figur 8b: zeigt die vierte Ausführungsform des Spritzpistolenfilters in der Seitenansicht.
- Figur 8c: zeigt die vierte Ausführungsform des Spritzpistolenfilters vom Filterkopf aus betrachtet.
- Figur 9: zeigt die erste Ausführungsform des erfindungsgemässen Spritzpistolenfilters im in eine Spritzpistole eingebauten Zustand im Schnitt.
- Figur 10: zeigt eine Spritzpistole mit einem erfindunqsgemässen Spritzpistolenfilter in einer dreidimensionalen Ansicht.
- Figur 11: zeigt die Spritzpistole mit dem erfindungsgemässen Spritzpistolenfilter in einer Explosionsansicht.
- Figur 12: zeigt einen Teil eines Beschichtungssystems, bei dem der erfindungsgemässe SpritzpisLolenfilter in die Schlauchleitung eingebaut ist, die zur Spritzpistole führt.

### Wege zur Ausführung der Erfindung

Der erfindungsgemässe Spritzpistolenfilter kann in den verschiedensten Spritzpistolen verwendet werden. Im Folgenden wird unter einer Spritzpistole eine Pistole zum Verspritzen oder Versprühen einer Flüssigkeit, wie zum Beispiel wasserlöslicher Lack, lösungsmittelhaltiger Lack, Mehrkomponentenlack, Grundierung, Dispersion, Öl oder Korrosionsschutzmittel, versLanden. Eine Lackierpistole ist ebenfalls eine Spritzpistole, die zum Lackieren von Oberflächen bestimmt und dementsprechend für die zu versprühenden Lacke ausgebildet ist.

Der erfindungsgemässe Spritzpistolenfilter ist insbesondere zum Filtern von Farbe, Grundierung, Korrosionsschutzmittel oder Öl geeignet. Als Farbe werden im Folgenden sowohl wasserlösliche Lacke, lösungsrmttelhaltige Lacke, Metalliclacke, Lasuren, Dispersionen als auch Mehrkomponentenlacke bezeichnet.

Bei Dispersionen und Metalliclacken werden grobmaschige Filtergewebe verwendet. Bei Lasuren, Klarlacken und anderen dünnflüssigen Spritzmaterialien kommen feinmaschige Filtergewebe zum Einsatz.

### Erste Ausführungsform

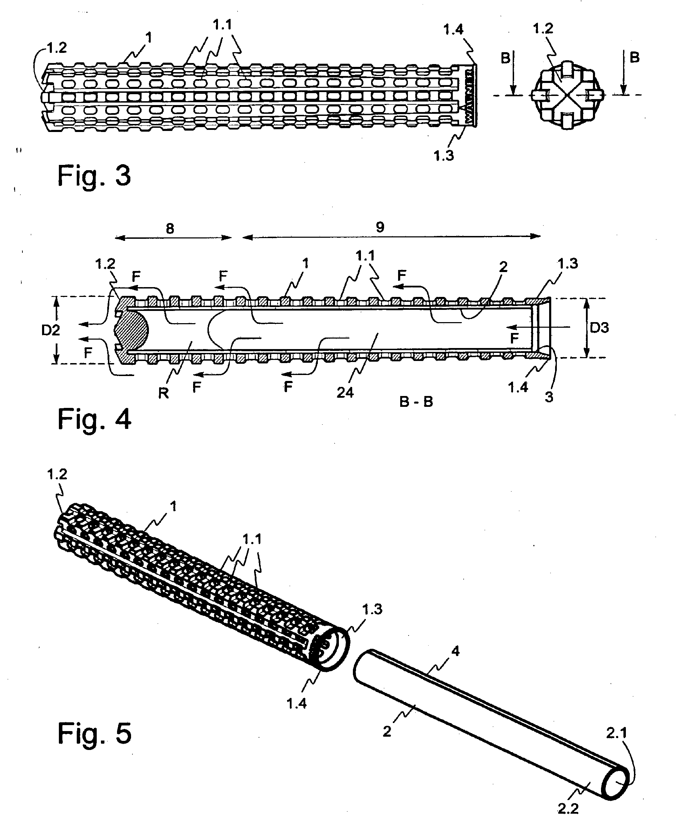

Figur 3 zeigt eine erste mögliche Ausführungsform des erfindungsgemässen Spritzpistolenfilters in der Seitenansicht und in der Ansicht von vorn, das heisst vom Filterkopf 1.2 aus betrachtet. In Figur 4 ist die erste Ausführungsform des erfindungsgemässen Spritzpistolenfilters im Längsschnitt dargestellt. Figur 5 schliesslich zeigt die erste Ausführungsform des erfindungsgemässen Spritzpistolenfilters in einer Explosionsansicht. Der Spritzpistolenfilter umfasst eine rohrförmige Filterstütze 1 und ein innerhalb der Filterstütze 1 angeordnetes zylinderförmiges Filtergewebe 2. Die Aussenseite 2.2 des Filtergewebes 2 liegt an der Innenseite der FiltersLütze 1 an.

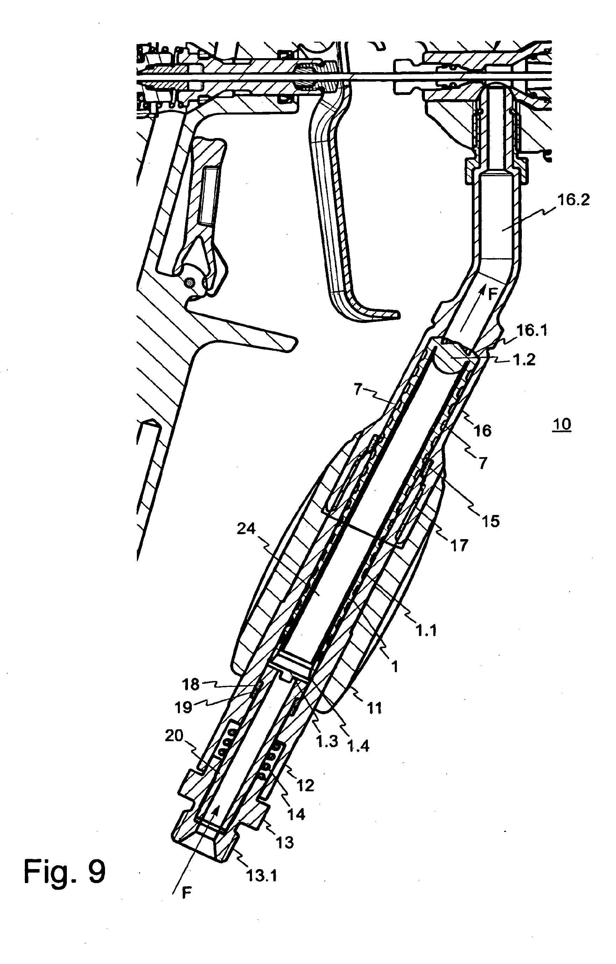

Die Filterstütze 1 umfasst einen Einlass 1.3, durch den zu filternde Flüssigkeit F ins Innere 24 des Spritzpistolenfilters strömt. Von dort wird die Flüssigkeit F durch das Filtergewebe 2 hindurch nach aussen gedrückt, wobei Partikel, Verunreinigungen und Klumpen im Inneren des SpritzpistolenfilLers zurückgehalten werden. Das zurückgehaltene Material R ist in Figur 4 symbolisch dargestellt. Die gefilterte Flüssigkeit F gelangt durch eine Reihe von Auslassöffnungen 1.1, welche in der Filterstütze 1 vorhanden sind, wieder aus dem Spritzpistolenfilter heraus. Anschliessend strömt die gefilterte Flüssigkeit zwischen der Filterstütze 1 und dem Filtergehäuse 12, 16 (siehe Fig. 9) in Richtung des Filterkopfs 1.2. Von dort gelangt die gefilterte Flüssigkeit durch die im Filterkopf 1.2 vorhandenen Kanäle in den Materialkanal 16.2.

Die Filterstütze 1 kann aussen einen zylindrischen Abschnitt 8 und einen konischen Abschnitt 9 aufweisen. Dabei ist der Durchmesser D3 im Einlassbereich 1.3 kleiner als der Durchmesser D2 am Filterkopf 1.2. Eine solche Geometrie hat den Vorteil, dass der Spritzpistolenfilter leichter aus dem Filtergehäuse 12, 16 (siehe Figur 9) entnommen werden kann. Insbesondere wenn Farbe im Filtergehäuse 12, 16 ausgehärtet und der Spritzpistolenfilter dadurch mit dem Filtergehäuse 12, 16 verklebt ist, lässt sich durch eine solche Geometrie der Kraftaufwand, der erforderlich ist, um den Spritzpistolenfilter aus dem Filtergehäuse 12, 16 herauszuziehen, deutlich reduzieren.

Das Filtergewebe 2 hat eine im wesentlichen zylindrische Form. Als Ausgangsmaterial kann ein Filtergewebe von der Rolle verwendet werden, das auf Mass geschnitten, auf den gewünschten Durchmesser gerollt und an der Nahtstelle 4 verschweisst oder geklebt wird. Anschliessend wird das Filtergewebe 2 in die Filterstütze 1 gesteckt und mit ihr beispielsweise durch eine Klebung oder Schweissung 3 verbunden.

Die Dichtung 1.4 ist bei der Ausführungsform gemäss den Figuren 3, 4 und 5 als Dichtlippe ausgebildet. Im eingebauten Zustand liegt die Dichtlippe 1.4 am Filtergehäuse 12 an und dichtet den Einlass 1.3 des Spritzpistolenfilters gegenüber dessen Auslassöffnungen 1.1 ab. Je grösser der Druck im Inneren des Spritzpistolenfilters ist, desto besser ist die Dichtwirkung der Dichtlippe 1.4.

### Zweite Ausführungsform

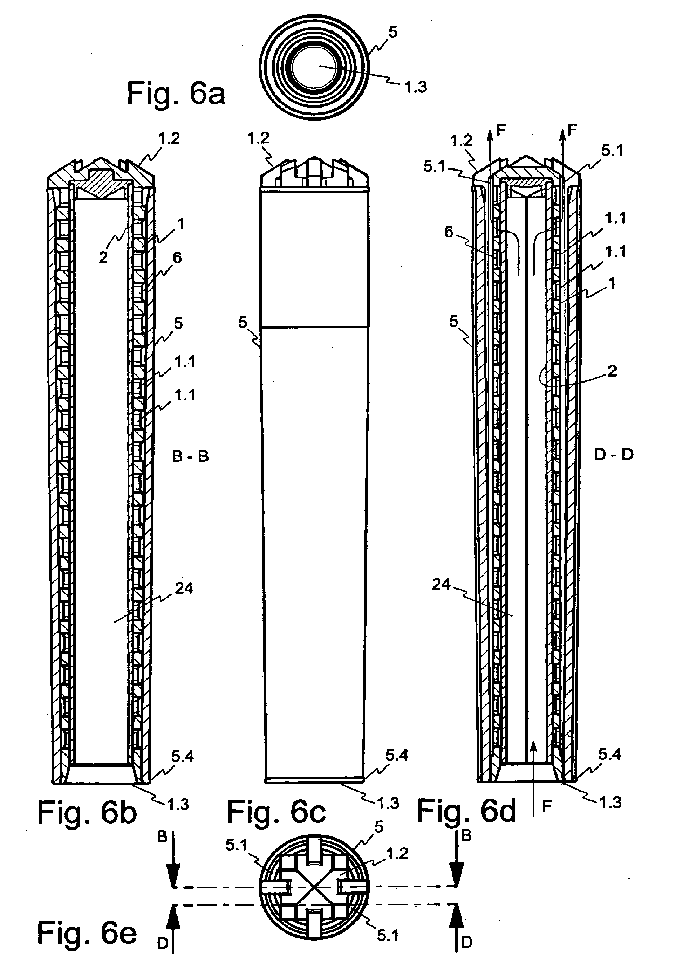

In den Figuren 6a, 6b und 6c ist eine zweite mögliche Ausführungsform des erfindungsgemässen Spritzpistolenfilters in der Ansicht von der Einlassseite aus betrachtet, in der Ansicht im Längsschnitt entlang der Schnittlinie B-B und in der Seitenansicht dargestellt. Die Figuren 6d und 6e zeigen die zweite Ausführungsform des Spritzpistolenfilters im Längsschnitt entlang der Schnittlinie D-D und in der Ansicht von vorn.

Die zweite Ausführungsform unterscheidet sich von der ersten Ausführungsform im Wesentlichen dadurch, dass bei ihr eine zusätzliche Hülse 5 vorgesehen ist, in der die Filterstütze 1 zusammen mit dem Filtergewebe stecken. Die Aussenseite der Filterstütze 1 und die Innenseite der Hülse 5 bilden gemeinsam einen Kanal 6 für die gefilterte Flüssigkeit F. Die Auslassöffnungen 5.1 des Spritzpistolenfilters befinden sich am Filterkopf 1.2.

Indem die gefilterte Flüssigkeit F durch den Kanal 6 geführt wird und erst am Filterkopf 1.2 durch die Auslassöffnungen 5.1 aus dem Spritzpistolenfilter austritt, kommt sie nicht mit dem Filtergehäuse 12, 16 der Spritzpistole 10 in Kontakt. Wenn die Flüssigkeit F im Spritzpistolenfilter aushärtet, verklebt der Spritzpistolenfilter nicht mit dem Filtergehäuse 12, 16. Auf diese Weise lässt sich der Kraftaufwand zur Entnahme des Spritzpistolenfilters gegenüber der ersten Ausführungsform noch weiter reduzieren. Ein weiterer Vorteil ist, dass der Benutzer beim Entnehmen des Spritzpistolenfilters nicht mit der FlüssigkeiL F in Berührung kommt, seine Hände bleiben sauber.

### Dritte Ausführungsform

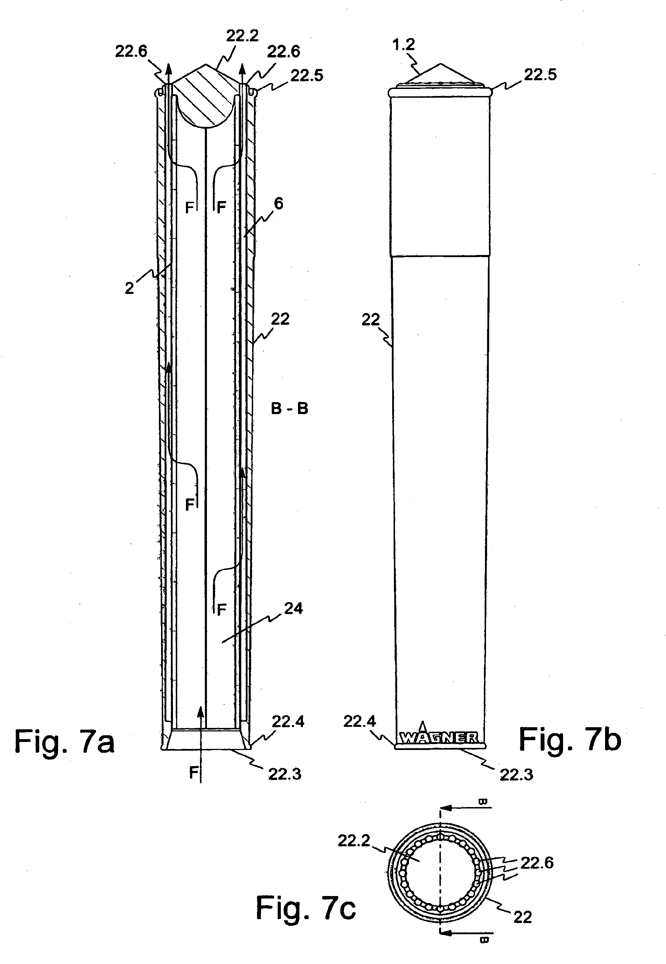

Die Figuren 7a, 7b und 7c zeigen eine dritte mögliche Ausführungsform des erfindungsgemässen Spritzpistolenfilters im Längsschnitt entlang der Schnittlinie B-B, in der Seitenansicht und von der Einlassseite aus betrachtet.

Die dritte Ausführungsform unterscheidet sich von der zweiten Ausführungsform im Wesentlichen dadurch, dass bei ihr eine Hülse-22 vorgesehen ist, in der das Filtergewebe 2 steckt. Die Hülse 22 dient als Filterstütze für das Filtergewebe 2 und bildet mit ihm einen Kanal 6, durch den die gefilterte Flüssigkeit F abtransportiert wird. Die Auslassöffnungen 22.6 befinden sich bei der dritten Ausführungsform am Filterkopf 22.2.

Wie auch bei der dritten Ausführungsform kommt die gefilterte Flüssigkeit F nicht mit dem Filtergehäuse 12, 16 der Spritzpistole 10 in Kontakt. Wenn die Flüssigkeit F im Spritzpistolenfilter aushärtet, verklebt der Spritzpistolenfilter nicht mit dem Filtergehäuse 12, 16. Auf diese Weise lässt sich der Kraftaufwand zur Entnahme des Spritzpistolenfilters gegenüber der ersten Ausführungsform noch weiter reduzieren.

### Vierte Ausführungsform

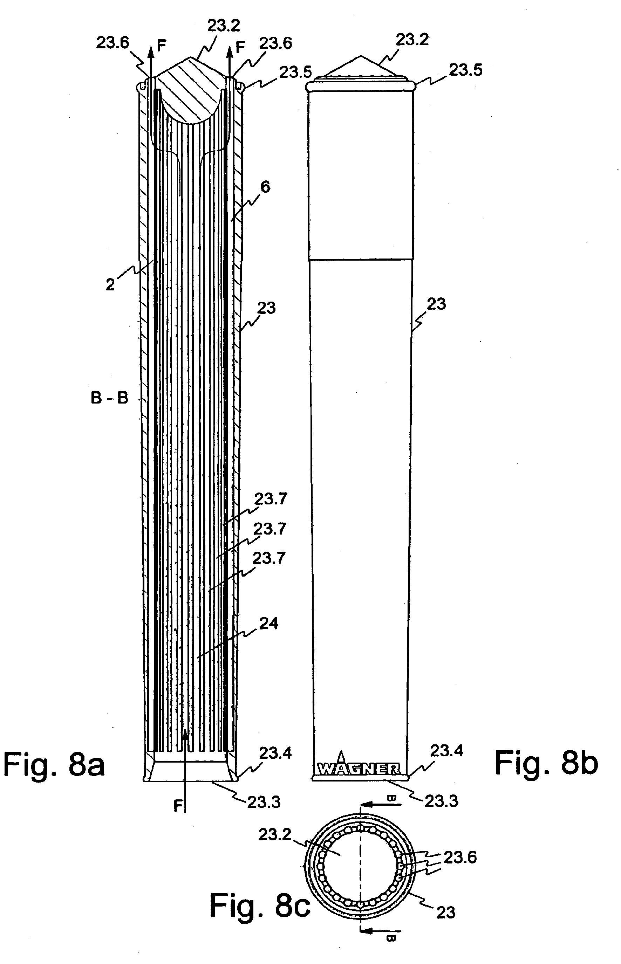

In den Figuren 8a, 8b und 8c ist eine vierte mögliche Ausführungsform des erfindungsgemässen Spritzpistolenfilters im Längsschnitt entlang der Schnittlinie B-B, in der Seitenansicht und von der Einlassseite aus betrachtet, dargestellt.

Die vierte Ausführungsform unterscheidet sich von der dritten Ausführungsform im Wesentlichen durch die Innenform der Hülse, die das Filtergewebe 1 umgibt. Die Hülse 23 weist auf ihrer Innenseite in eine Reihe von in Längsrichtung verlaufenden Nuten 23.7 auf, die mit dem Filtergewebe 2 eine Reihe von Kanälen 6 bilden, durch, die die gefilterte Flüssigkeit F zu den Auslassöffnungen 23.6 transportiert wird. Die Auslassöffnungen 23.6 des Spritzpistolenfilters befinden sich wie bei der dritten Ausführungsform am Filterkopf 23.2.

Sämtliche Ausführungsformen des erfindungsgemässen Spritzpistolenfilters funktionieren prinzipiell auf die gleiche Weise. Die zu filternde Flüssigkeit F gelangt durch eine Einlassöffnung 1.3, 22.3 beziehungsweise 23.3 ins Innere 24 des Spritzpistolenfilters und wird von dort durch das Filtergewebe 2 nach aussen gedrückt, wobei die Verunreinigungen im Inneren 24 des Spritzpistolenfilters zurückgehalten werden.

Figur 9 zeigt die erste Ausführungsform des erfindungsgemässen Spritzpistolenfilters im in eine Spritzpistole 10 eingebauten Zustand im Schnitt. Das Filtergehäuse für den Spritzpistolenfilter umfasst einen stromaufwärtigen Gohäuseteil 12 und einen stromabwärtigen Gehäuseteil 16. Beide Gehäuseteile 12 und 16 sind über eine lösbare Verbindung 17, beispielsweise eine Schraubverbindung, mitcinander verbunden. Die beiden Gehäuseteile 12 und 16 sind teilweise von einem Griffstück 11 umgeben, das das Verbinden und Trennen der Gehäuseteile 12 und 16 erleichtert. Eine Dichtung 15 sorgt dafür, dass an der Verbindungsstelle 17 keine Flüssigkeit F austreten kann.

Der stromaufwärtige Gehäuseteil 12 ist mit einem Drehgelenk 13 verbunden, welches am stromaufwärtigen Ende eine Kupplung 13.1 zum Anschliessen einer Versorgungsleitung trägt. Innerhalb des Drehgelenks 13 ist eine Hülse 20 angeordnet, die ins Innere des stromaufwärtigen Gehäuseteils 12 ragt. Zum Abdichten des Drehgelenks 13 sind zwei Dichtungsringe 18 und 19 vorgesehen. Über eine Druckfeder 14 wird erreicht, dass die Hülse 20 permanent auf die beiden Dichtringe 18 und 19 gedrückt wird.

Das stromabwärtige Gehäuseteil 16 weist im Inneren einen Absatz 16.1 auf, der als Anschlag für die den Spritzpistolenfilter dient. Ausgangsseitig mündet das stromabwärtige Gehäuseteil 16 in jenen Teil der Spritzpistole 10, der die Ventilnadel für die Sprühdüse beinhaltet.

Statt der ersten Ausführungsform des Spritzpistolenfilters kann das Filtergehäuse 12, 16 der Spritzpistole 10 auch eine der anderen beschriebenen Ausführungsformen des SpritzpistolenfilLers aufnehmen.

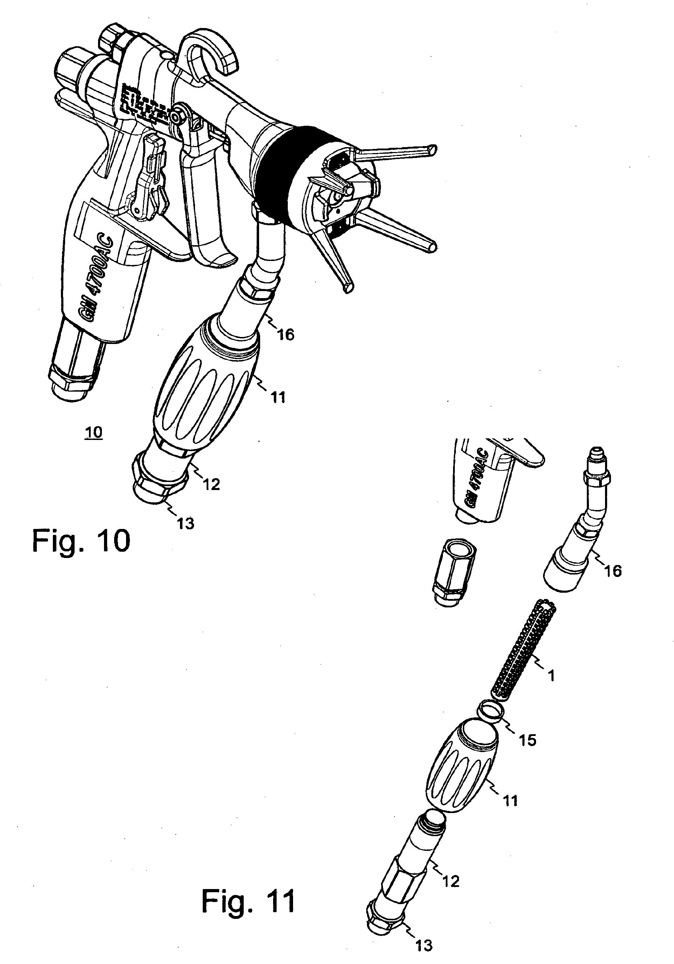

Figur 10 zeigt die Spritzpistole 10 miL einem erfindungsgemässen Spritzpistolenfilter in einer dreidimensionalen Ansicht.

Figur 11 zeigt einen Teil der Spritzpistole 10 mit dem erfindungsgemässen Spritzpistolenfilter in einer Explosionsansicht.

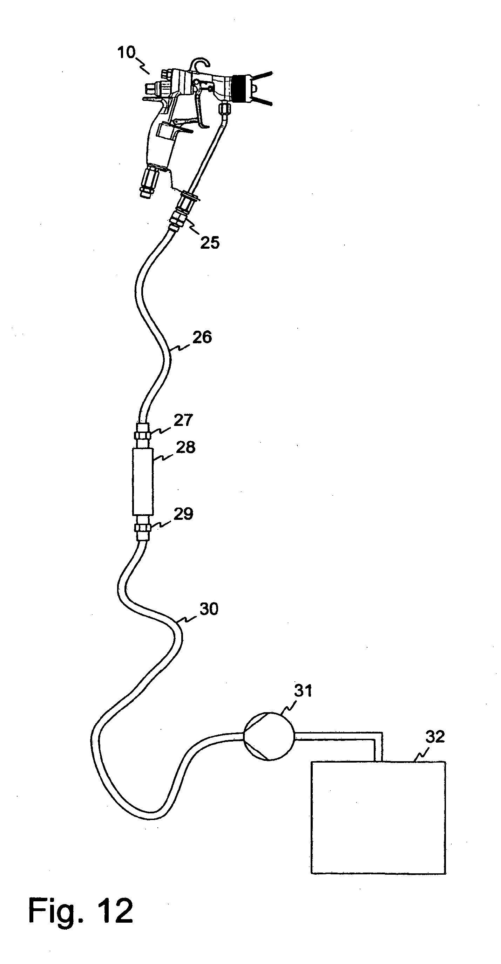

Figur 12 zeigt einen Teil eines Beschichtungssystems, bei dem der erfindungsgemässe Spritzpistolenfilter in eine Schlauchleitung 26, 30 eingebaut ist, über welche die Spritzpistole 10 mit Beschichtungsmaterial versorgt wird. Der erlindungsgemässe Spritzpistolenfilter befindet sich in einem Filtergehäuse 28, das einlassseitig eine Kupplung 29 für einen ersten Materialschlauch 30 und auslassseitig eine weitere Kupplung 27 für einen zweiten Materialschlauch 26 aufweist. Mit einer Förderpumpe 31 wird das zu filternde Beschichtungsmaterial aus einem Vorratsbehälter 32 herausgepumpt und über den ersten Materialschlauch 30 dem erfindungsgemässen Spritzpistolenfilter zugeführt. Über den zweiten Materialschhlauch 26 wird das durch den Spritzpistolenfilter gefilterte Material zur Spritzpistole 10 transportiert. Der zweite Materialschlauch 26 ist ebenfalls mit einer Kupplung 2b ausgestattet, um ihn mit der Spritzpistole 10 zu verbinden.

Der erfindungsgemässe Spritzpistolenfilter muss also nicht Bestandteil der Spritzpistole 10 sein, sondern kann auch in der Schlauchleitung 26, 30 angeordnet sein.

Die in Figur 12 gezeigte Ausführungsform hat den Vorteil, dass die Spritzpistole 10 noch leichter ist. Der Benutzer muss weder das Gehäuse für den Spritzpistolenfilter, noch den Spritzpistolenfilter selbst noch das im Spritzpistolenfilter befindliche Reschichtungsmaterial heben. Der Reschichtungsvorgang wird bequemer und ist weniger ermüdend.

Die vorhergehende Beschreibung der Ausführungsbeispiele gemäss der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang dcr Erfindung sowie ihre Äquivalente zu verlassen. So sind beispielsweise auch die in den Figuren 6 bis 8 gezeigten Ausführungsformen des Spritzpistolenfilters für die Spritzpistole 10 verwendbar. Die einzelnen Merkmale der in den Figuren 3 bis 8 gezeigten Ausführungsformen des Spritzpistolenfilters sind auch auf eine andere als in den Figuren gezeigte Weise miteinander kombinierbar. So können zum Beispiel auch die zweite, dritte und vierte Ausführungsform aussen einen zylindrischen Abschnitt 8 und einen konischen Abschnitt 9 aufweisen.

### Bezugszeichenliste

- 1: Filterstütze
- 1.1: Auslassöffnungen
- 1.2: Filterkopf
- 1.3: Einlass
- 1.4: DichLlippe
- 2: Filtergewebe
- 2.: Innenseite
- 2.2: Aussenseite
- 3: Schweissnaht
- 4: Schweissnaht
- 5: Hülse
- 5.4: Dichtlippe
- 6: Kanal
- 7: Kanal
- 8: zylindrischer Abschnitt
- 9: konischer Abschnitt
- 10: Spritzpistole
- 11: Griff
- 12: stromaufwärtiger Teil des Filtergehäuses
- 13: Drehgelenk
- 13.1: Kupplung
- 14: Feder
- 15: Dichtung
- 16: stromabwärtiger Teil des Filtergehäuses
- 16.1: Absatz
- 16.2: Materialkanal
- 17: lösbare Verbindung
- 18: Dichtung
- 19: Dichtung
- 20: Anschlusshülse
- 22: Hülse
- 22.2: Filterkopf
- 22.3: Einlass
- 22.4: Dichtlippe
- 22.5: Dichtlippe
- 22.6: Auslassöffnung
- 23: Hülse
- 23.2: Filterkopf
- 23.3: Einlass
- 23.4: Dichtlippe
- 23.5: Dichtlippe
- 23.6: Auslassöffnung
- 23.7: Längsnut in der Hülse
- 24: Innenraum des Spritzpistolenfilters
- 25: Kupplung
- 26: Materialschlauch
- 27: Kupplung
- 28: Filtergehäuse mit Spritzpistolenfilter
- 29: Kupplung
- 30: Materialschlauch
- 31: Förderpumpe
- 32: Vorratsbehälter miL Beschichtungsmaterial
- F: Strömungsrichtung der Flüssigkeit
- D2: Durchmesser am Filterkopf
- D3: Durchmesser am Einlass
- 100: Spritzpistolenfilter
- 101: Filterstütze
- 102: Filtergewebe
- 103: Kanal
- 104: Auslassöffnungen
- 105: Innenraum
- 106: stromaufwärtiger Innenraum
- 110: Spritzpistole
- 111: Feder
- 112: Filtergehäuse
- 116: Filtergehäuse

## Patentansprüche

1. Spritzpistolenfilter zum Filtern von Flüssigkeit,
- bei dem ein Filtergewebe (2) vorgesehen ist,
- bei dem das Filtergewebe (2) eine zylindrische Rohrform aufweist,
- bei dem eine Filterstütze (1; 22; 23) vorgesehen ist, die Auslassöffnungen (1.1; 22.6; 23.6) für die Flüssigkeit (F) aufweist und das Filtergewebe (2) aussen umgibt,
- bei dem die Filterstütze innen zylindrisch geformt ist,
**dadurch gekennzeichnet, dass**
die Filterstütze (1; 22; 23) aussen konisch geformt ist.

2. Spritzpistolenfilter nach Patentanspruch 1,
bei dem die Auslassöffnungen (1.1) über die Länge der Filterstütze (1) verteilt sind.

3. Spritzpistolenfilter nach Patentanspruch 1 oder 2,
bei dem die Auslassöffnungen (5.1; 22.6; 23.6) im stromabwärtigen Endbereich der Filterstütze (22; 23) angeordnet sind.

4. Spritzpistolenfilter nach einem der Patentansprüche 1 bis 3,
bei dem die Filterstütze (1) am stromaufwärtigen Ende einen Einlass (1.3) aufweist und am stromabwärtigen Ende (1.2) geschlossen ist.

5. Spritzpistolenfilter nach einem der Patentansprüche 1 bis 4,
bei dem das Filtergewebe (2) aus Draht hergestellt ist.

6. Spritzpistolenfilter nach einem der Patentansprüche 1 bis 5,
bei dem die Filterstütze (1) aus Polyamid, Polypro-pylen, Polyethylen oder Polyoxymethylen hergestellt ist.

7. Spritzpistolenfilter nach einem der Patentansprüche 1 bis 6,
bei dem die Filterstütze (1.1) im Einlassbereich (1.3) eine Dichtung (1.4) aufweist.

8. Spritzpistolenfilter nach einem der Patentansprüche 1 bis 7,
- bei dem eine Hülse (5) vorgesehen ist, in der die Filterstütze (1) steckt, und
- bei dem die Filterstütze (1) und die Hülse (5) derart ausgebildet sind, dass sie einen Kanal (6) für die Flüssigkeit (F) bilden.

9. Spritzpistole mit einem Spritzpistolenfilter nach einem der Patentansprüche 1 bis 8,
- bei der ein Filtergehäuse (12, 16) zur Aufnahme des Spritzpistolenfilters vorgesehen ist, und
- bei der die Aussenseite der Filterstütze (1) am Filtergehäuse (12, 16) anliegt.

10. Spritzpistole nach Patentanspruch 9,
bei der die Filterstütze (1) und das Filtergehäuse (12, 16) derart ausgebildet sind, dass sie zusammen einen Kanal (7) für die Flüssigkeit (F) bilden.

11. Spritzpistole nach Patentanspruch 9 oder 10,
bei der die Filterstütze (1) und das Filtergehäuse (12, 16) derart ausgebildet sind, dass sie zusammen mehrere Kanäle (7) bilden, die miteinander verbunden sind.

12. Spritzpistole nach einem der Patentansprüche 9 bis 11,
bei der das Filtergehäuse (12, 16) einen ersten und
einen zweiten Gehäuseteil (12, 16) umfasst, die mittels einer lösbaren Verbindung (17) miteinander verbunden sind.

13. Spritzpistole nach einem der Patentansprüche 9 bis 12,
bei der das Filtergehäuse (12, 16) einen Absatz (16.1) aufweist, an dem sich die Filterstütze (1) abstützt.

14. Spritzsystem mit einem Spritzpistolenfilter nach einem der Patentansprüche 1 bis 8,
bei dem eine Spritzpistole (10) und eine Schlauchleitung (26, 30) vorgesehen sind, wobei der Spritzpistolenfilter zwischen zwei Schlauchabschnitten der Schlauchleitung (26, 30) angeordnet ist.

15. Verwendung des Spritzpistolenfilters nach einem der Patentansprüche 1 bis 7,
zum Filtern von wasserlöslichem Lack, lösungsmittelhaltigem Lack, Mehrkomponentenlack, Dispersion, Grundierung, Öl oder Korrosionsschutzmittel.

## Claims

1. A spray gun filter for filtering liquid,
- wherein a filter fabric (2) is provided,
- wherein the filter fabric (2) has a cylindrical tubular shape,
- wherein a filter support (1; 22; 23) is provided which has outlet openings (1.1; 22.6; 23.6) for the liquid (F) and which surrounds the filter fabric (2) from the outside,
- wherein the filter support is cylindrical on the inside,
**characterized in that** the filter support (1; 22; 23) is conical on the outside.

2. The spray gun filter according to patent claim 1,
wherein the outlet openings (1.1) are distributed over the length of the filter support (1).

3. The spray gun filter according to patent claim 1 or 2,
wherein the outlet openings (5.1; 22.6; 23.6) are arranged in the downstream end region of the filter support (22; 23).

4. The spray gun filter according to any one of the patent claims 1 to 3,
wherein the filter support (1) has an inlet (1.3) at the upstream end and is closed at the downstream end (1.2).

5. The spray gun filter according to any one of the patent claims 1 to 4,
wherein the filter fabric (2) is produced from wire.

6. The spray gun filter according to any one of the patent claims 1 to 5,
wherein the filter support (1) is produced from polyamide, polypropylene, polyethylene or polyoxymethylene.

7. The spray gun filter according to any one of the patent claims 1 to 6,
wherein the filter support (1.1) has a seal (1.4) in the inlet region (1.3).

8. The spray gun filter according to any one of the patent claims 1 to 7,
- wherein a sleeve (5) is provided in which the filter support (1) is fitted, and
- wherein the filter support (1) and the sleeve (5) are formed in such a manner that they form a channel (6) for the liquid (F).

9. A spray gun comprising a spray gun filter according to any one of the patent claims 1 to 8,
- wherein a filter housing (12, 16) for receiving the spray gun filter is provided, and
- wherein the outside of the filter support (1) rests against the filter housing (12, 16).

10. The spray gun according to patent claim 9,
wherein the filter support (1) and the filter housing (12, 16) are formed in such a manner that they together form a channel (7) for the liquid (F).

11. The spray gun according to patent claim 9 or 10,
wherein the filter support (1) and the filter housing (12, 16) are formed in such a manner that they together form a plurality of channels (7) that are connected to one another.

12. The spray gun according to any one of the patent claims 9 to 11,
wherein the filter housing (12, 16) comprises a first and a second housing part (12, 16) which are connected to one another by means of a releasable connection (17).

13. The spray gun according to any one of the patent claims 9 to 12,
wherein the filter housing (12, 16) has a shoulder (16.1) on which the filter support (1) is supported.

14. A spraying system comprising a spray gun filter according to any one of the patent claims 1 to 8,
wherein a spray gun (10) and a tube line (26, 30) are provided, wherein the spray gun filter is arranged between two tube portions of the tube line (26, 30).

15. Use of the spray gun filter according to any one of the patent claims 1 to 7,
for filtering water-soluble lacquer, solvent-containing lacquer, multi-component lacquer, dispersion, primer, oil or anti-corrosion agents.

## Revendications

1. Filtre de pistolet pulvérisateur pour la filtration de liquides,
- dans lequel il est prévu un tissu filtrant (2),
- dans lequel le tissu filtrant (2) présente une forme tubulaire cylindrique,
- dans lequel il est prévu un support de filtre (1; 22; 23) comportant des ouvertures d'évacuation (1.1; 22.6; 23.6) pour le liquide (F) et entourant le tissu filtrant (2) de l'extérieur,
- dans lequel le support de filtre est conçu cylindrique à l'intérieur,
**caractérisé en ce que**
le support de filtre (1; 22; 23) est conçu conique à l'extérieur.

2. Filtre de pistolet pulvérisateur selon la revendication 1,
dans lequel les ouvertures d'évacuation (1.1) sont réparties sur la longueur du support de filtre (1).

3. Filtre de pistolet pulvérisateur selon la revendication 1 ou 2,
dans lequel les ouvertures d'évacuation (5.1; 22.6; 23.6) sont agencées dans la région de l'extrémité aval du support de filtre (22; 23).

4. Filtre de pistolet pulvérisateur selon l'une des revendications 1 à 3,
dans lequel le support de filtre (1) comporte une admission (1.3) à l'extrémité amont et est fermé à l'extrémité aval (1.2).

5. Filtre de pistolet pulvérisateur selon l'une des revendications 1 à 4,
dans lequel le tissu filtrant (2) est réalisé en fil de fer.

6. Filtre de pistolet pulvérisateur selon l'une des revendications 1 à 5,
dans lequel le support de filtre (1) est constitué de polyamide, de polypropylène, de polyéthylène ou de polyoxyméthylène.

7. Filtre de pistolet pulvérisateur selon l'une des revendications 1 à 6,
dans lequel le support de filtre (1.1) comporte un joint d'étanchéité (1.4) dans la région d'admission (1.3).

8. Filtre de pistolet pulvérisateur selon l'une des revendications 1 à 7,
- dans lequel il est prévu une douille (5) dans laquelle est inséré le support de filtre (1), et
- dans lequel le support de filtre (1) et la douille (5) sont conçus de manière à former un canal (6) pour le liquide (F).

9. Pistolet pulvérisateur avec un filtre de pistolet pulvérisateur selon l'une des revendications 1 à 8,
- dans lequel il est prévu un boîtier de filtre (12, 16) pour l'admission du filtre de pistolet pulvérisateur, et
- dans lequel le côté extérieur du support de filtre (1) s'applique sur le boîtier de filtre (12, 16).

10. Pistolet pulvérisateur selon la revendication 9, dans lequel le support de filtre (1) et le boîtier de filtre (12, 16) sont conçus de manière à former conjointement un canal (7) pour le liquide (F).

11. Pistolet pulvérisateur selon la revendication 9 ou 10,
dans lequel le support de filtre (1) et le boîtier de filtre (12, 16) sont conçus de manière à former conjointement plusieurs canaux (7) reliés les uns aux autres.

12. Pistolet pulvérisateur selon l'une des revendications 9 à 11,
dans lequel le boîtier de filtre (12, 16) comprend une première et une deuxième partie de boîtier (12, 16) reliées l'une à l'autre au moyen d'une liaison détachable (17).

13. Pistolet pulvérisateur selon l'une des revendications 9 à 12,
dans lequel le boîtier de filtre (12, 16) comporte un talon (16.1) sur lequel s'appuie le support de filtre (1).

14. Système de pulvérisation avec un filtre de pistolet pulvérisateur selon l'une des revendications 1 à 8, dans lequel il est prévu un pistolet pulvérisateur (10) et un tuyau flexible (26, 30), dans lequel le filtre de pistolet pulvérisateur est agencé entre deux sections de tuyau du tuyau flexible (26, 30).

15. Utilisation du filtre de pistolet pulvérisateur selon l'une des revendications 1 à 7,
pour la filtration de peinture hydrosoluble, de peinture contenant des solvants, de peinture à plusieurs composants, de dispersion, de primaire, d'huile et d'agent anticorrosion.
